# Europäisches Patentamt
# European Patent Office
# Office européen des brevets

(19)

(11) Numéro de publication : **0 028 189**
**B1**

(12)

# FASCICULE DE BREVET EUROPÉEN

(45) Date de publication du fascicule du brevet :
30.01.85

(51) Int. Cl.⁴ : **G 21 C   9/00**, G 21 C 13/02

(21) Numéro de dépôt : **80401493.4**

(22) Date de dépôt : **21.10.80**

(54) **Chaudière nucléaire.**

(30) Priorité : **30.10.79 FR 7926871**

(43) Date de publication de la demande :
**06.05.81 Bulletin 81/18**

(45) Mention de la délivrance du brevet :
**30.01.85 Bulletin 85/05**

(84) Etats contractants désignés :
**BE CH DE GB IT LI LU NL SE**

(56) Documents cités :
**DE-A- 2 261 477**
**FR-A- 2 203 041**
**FR-A- 2 265 152**
**FR-A- 2 282 698**
**FR-A- 2 337 409**
**US-A- 2 893 465**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Moutard, Daniel**
**15, Avenue du Trégor**
**F-78310 Maurepas (FR)**
Inventeur : **Pierrat, Robert**
**46, Boulevard des Américains**
**F-44300 Nantes (FR)**

(74) Mandataire : **Mongrédien, André et al**
**c/o BREVATOME 25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne une chaudière nucléaire comportant un réacteur à eau ordinaire sous pression.

L'invention se rapporte plus précisément à une chaudière nucléaire du type comprenant une cuve fermée à sa partie supérieure par un couvercle démontable, un panier portant le cœur du réacteur et séparant la cuve en une zone interne chaude et une zone externe froide, au moins un générateur de vapeur, disposé à l'extérieur de la cuve et comportant une enceinte étanche et une plaque à tubes séparant l'enceinte en une partie primaire, ou boîte à eau, et une partie secondaire, la plaque à tubes portant des tubes en U dont les extrémités débouchent dans une zone froide et une zone chaude de la boîte à eau délimitées par une structure interne, deux tubulures rectilignes et coaxiales définissant un conduit interne et un conduit annulaire externe qui relient respectivement les zones chaudes et les zones froides de la cuve et de la boîte à eau.

Les chaudières nucléaires de ce type, encore appelées chaudières nucléaires à eau ordinaire sous pression du type de celles décrites dans le brevet FR-A-2 265 152, se caractérisent principalement par le fait que la cuve est reliée au générateur de vapeur par des tubulures courtes et rectilignes qui regroupent dans la même enveloppe les circulations aller et retour du fluide primaire, c'est-à-dire les conduits de liaison chaud et froid.

En cas de brèche au niveau des conduits de liaison, ce qui constitue l'un des accidents les plus graves pris en compte lors de la conception d'une centrale nucléaire, les chaudières de ce type présentent l'avantage de permettre de réaliser un supportage assurant le maintien des générateurs de vapeur, c'est-à-dire n'autorisant qu'un déplacement limité et contrôlé de ces générateurs. Cependant, le résultat obtenu grâce à un tel supportage n'est pas indépendant de la forme de la brèche. En d'autres termes, il n'est pas possible de limiter à une valeur donnée la fuite provoquée par une brèche des conduits de liaison en supportant les générateurs de vapeur.

Par ailleurs, on connaît du document FR-A-2 203 041 un dispositif constitué par un manchon disposé dans une zone d'épaisseur réduite d'une conduite, afin de limiter le débit de fuite en cas de rupture de la conduite dans ladite zone. Une application à un réacteur est envisagée. Toutefois, il est envisagé de palier à une éventuelle dilatation de la conduite en la munissant d'un soufflet de dilatation, ce qui introduirait un point de faiblesse inacceptable dans le cas d'une chaudière nucléaire.

L'invention a pour objet la réalisation d'une chaudière nucléaire du type défini ci-dessus, dans laquelle des moyens sont prévus pour limiter à une valeur donnée la fuite du circuit primaire provoquée par une rupture accidentelle des conduits de liaison disposés entre la cuve et chacun des générateurs, quelle que soit la forme de cette rupture.

A cet effet, et conformément à l'invention, une chaudière nucléaire du type défini précédemment est caractérisée en ce qu'un manchon de sécurité démontable, dont la paroi est conçue pour résister à la pression régnant dans le conduit annulaire externe, est disposé coaxialement à l'intérieur de ce conduit et définit avec la tubulure externe un jeu calibré permettant de limiter à une valeur donnée le débit de fuite en cas de rupture de la tubulure externe, le manchon de sécurité étant relié à la tubulure interne par des ailettes, de façon à former avec cette tubulure un ensemble monobloc, et la tubulure interne étant fixée de façon démontable au panier de cœur ou à la structure interne de la boîte à eau, la longueur de l'ensemble monobloc formé par la tubulure interne et par le manchon de sécurité étant inférieure au diamètre interne de la cuve, de telle sorte que cet ensemble peut être extrait par la cuve après démontage du couvercle et enlèvement du panier.

Le manchon disposé à l'intérieur du conduit externe permet de limiter la section de fuite du circuit primaire à une valeur donnée, quelle que soit la forme de la brèche formée dans la tubulure. En outre, le manchon de sécurité selon l'invention est démontable de façon à permettre l'inspection en service de la chaudière. Le manchon constitue également une protection des conduits de liaison contre les cycles et les chocs thermiques intervenant au cours des périodes transitoires liées aux variations du débit du fluide primaire ou aux variations de puissance.

Dans un mode de réalisation préféré de l'invention, chacune des extrémités du manchon de sécurité s'étend au-delà de la paroi externe de la tubulure externe et définit avec la paroi interne de cette tubulure le jeu calibré permettant de limiter le débit de fuite.

Conformément à un autre aspect de l'invention, des éléments annulaires élastiques sont disposés entre le manchon de sécurité et la paroi interne de la tubulure externe, de façon à supporter le manchon de sécurité et à éviter les vibrations.

On décrira maintenant, à titre d'exemple non limitatif, un mode de réalisation particulier de l'invention en se référant aux dessins annexés dans lesquels :

la figure 1 est une vue en coupe de la chaudière d'un réacteur à eau pressurisée dont la cuve communique par des conduits de liaison coaxiaux réalisés conformément à l'invention avec un générateur de vapeur, et

la figure 2 est une vue en coupe à plus grande échelle des conduits de liaison chaud et froid reliant la cuve au générateur de vapeur et du manchon de sécurité disposé à l'intérieur du conduit de liaison froid.

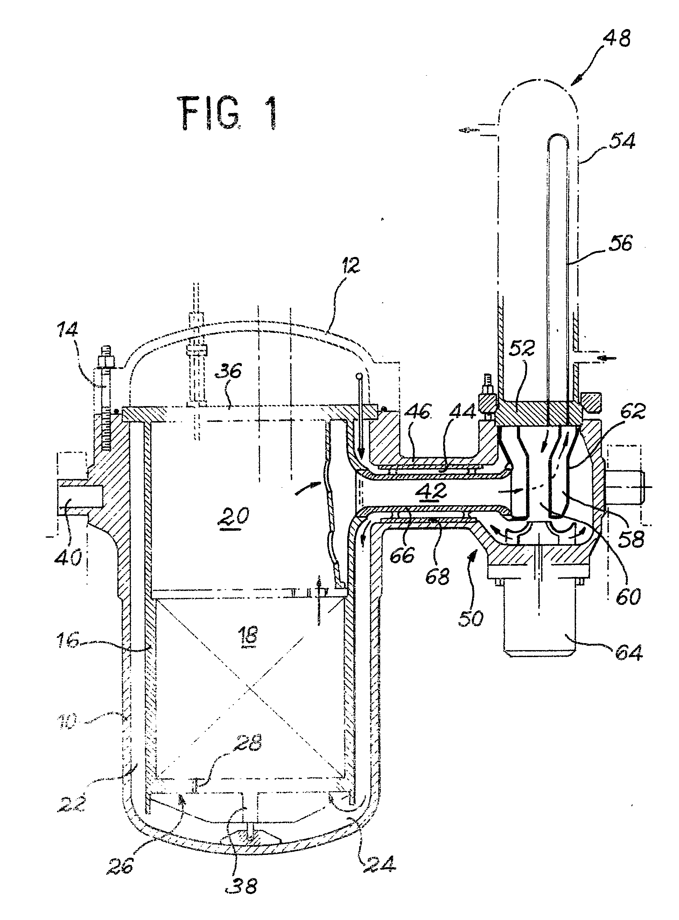

La chaudière nucléaire représentée sur la figure 1 comprend une cuve 10 fermée à sa partie supérieure par un couvercle 12 fixé à la cuve 10 par des goujons 14. La cuve 10 est cylindrique, d'axe vertical et contient un panier 16 portant le cœur 18 du réacteur. Le panier 16 sépare ainsi la cuve 10 en une zone interne chaude 20, sensiblement cylindrique, et une zone externe froide 22, formant un espace annulaire. Un passage 24 est défini entre l'extrémité inférieure du panier 16 et le fond de la cuve 10, pour permettre au fluide de la zone froide de pénétrer dans le cœur du réacteur par des passages 28 formés dans une grille 26 solidaire du panier 16.

Le panier 16 est supporté par une plaque 36 serrée entre le bouchon 12 et la cuve 10 et centrée par rapport à cette dernière au moyen d'une pièce 38.

Un ou plusieurs orifices radiaux 40 sont ménagés dans la paroi de la cuve 10, de façon à permettre l'injection d'un liquide de refroidissement de secours dans le cas où la circulation du liquide primaire dans la cuve 10 serait accidentellement interrompue.

Des générateurs de vapeur 48, dont l'un seulement est représenté sur la figure 1, comprennent chacun une plaque à tubes 52 séparant une partie primaire ou boîte à eau 50 d'une partie secondaire 54. La plaque à tubes 52 porte des tubes en U 56 dont les extrémités débouchent dans deux zones concentriques 58 et 60 de la boîte à eau 50 séparées par une structure interne 62.

Dans le mode de réalisation représenté, à chaque générateur de vapeur 48 est associée une pompe 64 disposée à la partie inférieure de la boîte à eau 50, sensiblement dans le prolongement axial du générateur.

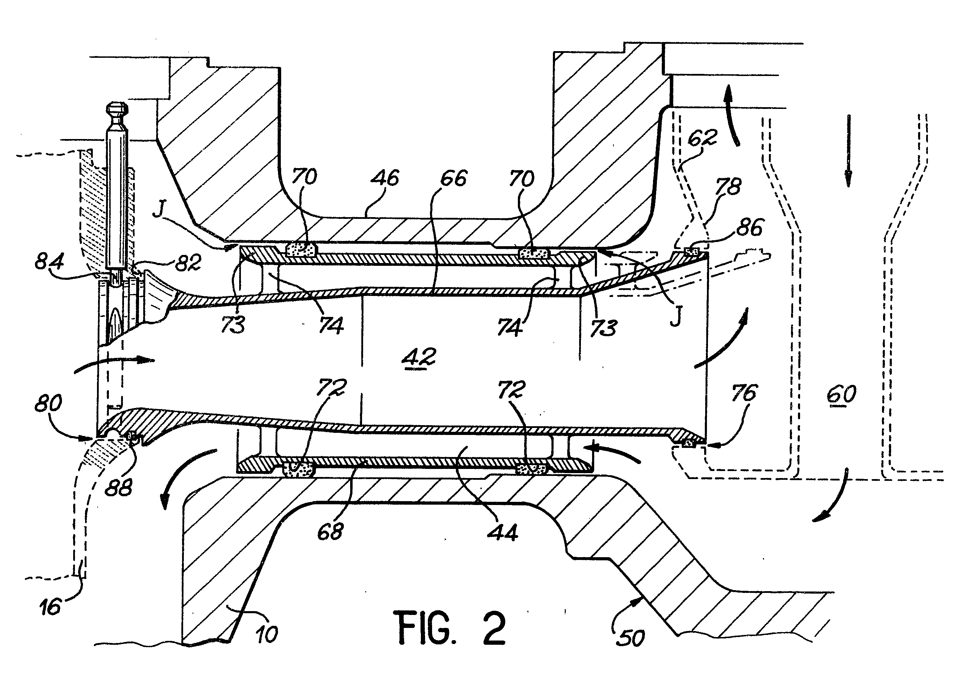

Comme l'illustrent les figures 1 et 2, une tubulure rectiligne et relativement courte 46 est disposée radialement par rapport à la cuve 10, qu'elle relie à la boîte à eau 50, Une tubulure 66 est disposée coaxialement à l'intérieur de la tubulure 46, entre le panier de cœur 16 et la structure interne 62 de la boîte à eau. Les tubulures 46 et 66 définissent ainsi un conduit interne chaud 42 reliant la zone chaude 20 de la cuve à la zone externe chaude 58 de la boîte à eau, et un conduit annulaire externe froid 44, reliant la zone interne froide 60 de la boîte à eau à la zone externe froide 22 de la cuve.

Conformément à l'invention, et comme l'illustre en particulier la figure 2, un manchon de sécurité 68 est disposé coaxialement à l'intérieur du conduit de liaison froid 44. L'épaisseur de la paroi du manchon 68 est calculée de façon à résister à la pression régnant dans le conduit 44, c'est-à-dire à la pression régnant dans le circuit primaire du réacteur.

La longueur du manchon 68 est supérieure à la longueur de la face externe de la tubulure 46, de telle sorte qu'il peut être supporté et centré par rapport à cette tubulure par l'intermédiaire d'éléments élastiques 70. Les éléments élastiques 70 sont disposés au niveau des extrémités de la face interne de la tubulure 46 et reçus dans des gorges 72 formées dans le manchon 68. De préférence, les éléments élastiques 70 sont constitués par des anneaux métalliques comportant des festons internes et externes. En raison de leurs propriétés élastiques, ces éléments permettent d'éviter les vibrations.

Le manchon 68 se prolonge à chacune de ses extrémités 73 au-delà des éléments annulaires 70, pour définir avec la paroi interne de la tubulure 46 un jeu calibré relativement faible j. Dans la variante de réalisation représentée sur la figure 2, en raison du sens du montage du manchon 68 dans la tubulure 46, le diamètre interne de cette tubulure et le diamètre extérieur correspondant du manchon 68, sont légèrement plus petits du côté de la boîte à eau 50 que du côté de la cuve 10.

Dans le mode de réalisation représenté, la tubulure interne 66 est supportée par le manchon 68 au moyen de deux séries d'ailettes 74 disposées au voisinage de chacune des extrémités du manchon. La tubulure 66 et le manchon 68 forment ainsi un ensemble monobloc et démontable susceptible d'être extrait par la cuve 10. A cet effet, l'extrémité de la tubulure 66 qui pénètre dans la boîte à eau 50 est reçue de façon coulissante dans un alésage 76 formé dans la paroi 78 de la structure interne 62 de la boîte à eau, et les dimensions de cette extrémité sont telles qu'elle peut traverser librement la tubulure externe 46 lorsque l'ensemble monobloc que constituent la tubulure 66 et le manchon 68 coulisse vers la gauche en considérant la figure 2.

De même, l'extrémité de la tubulure interne 66 qui pénètre dans la cuve 10 est reçue de façon coulissante dans un alésage 80 formé dans le panier de cœur 16, et définit un épaulement 82 venant normalement en butée contre l'extrémité de l'alésage 80 lorsque la tubulure 66 est en place, comme l'illustre la figure 2. Une clavette 84, accessible de l'extérieur de la cuve, peut alors être introduite radialement dans des trous en vis-à-vis formés à la fois dans le panier 16 et dans l'extrémité correspondante de la tubulure 66 pour immobiliser axialement l'ensemble monobloc constitué par la tubulure 66 et par le manchon 68. Enfin, l'étanchéité entre chacune des extrémités de la tubulure 66 et les alésages 76 et 80 est assurée par deux segments 86 et 88 respectivement.

Le fonctionnement de la chaudière nucléaire décrite en se référant à la figure 1 est identique au fonctionnement des chaudières nucléaires connues de ce type et ne sera pas décrit ici en détail. On remarquera simplement que, dans le mode de réalisation décrit, le liquide primaire contenu dans la cuve 10, dans les conduits 42 et 44 et dans la boîte à eau 50 du générateur 48 circule dans le sens des flèches sur les figures 1 et 2. Ainsi, le liquide chaud sortant du cœur 18 du réacteur et pénétrant dans la zone 20 de la cuve 10 est acheminé par le conduit interne 42 de chacune des boucles primaires du réacteur, dont l'une seulement est représentée, vers la zone annulaire externe 58 de la boîte à eau 50 du générateur de vapeur 48 correspondant. Le liquide primaire circule ensuite dans les tubes en U 56 du générateur de vapeur, de façon à vaporiser le liquide secondaire contenu dans la partie supérieure 54 de ce générateur. Le liquide refroidi qui sort des tubes en U 56 pour pénétrer dans la zone interne froide 60 de la boîte à eau 50 est ensuite acheminé sous l'impulsion de la pompe 64 dans la zone externe froide 22 de la cuve 10 par le conduit annulaire externe 44. Le liquide primaire est ensuite recyclé dans le cœur 18 du réacteur dans lequel il pénètre par les passages 28 formés dans la grille 26.

Conformément à l'invention et comme l'illustre en particulier la figure 2, si une brèche se produit dans l'une des tuyauteries externes 46 reliant la cuve 10 aux générateurs de vapeur 48, les manchons de sécurité 68 permettent de limiter le débit de la fuite qui en résulte à une valeur donnée relativement faible. En effet, quelles que soient la forme et les dimensions de la rupture intervenant dans la tubulure 46, c'est-à-dire aussi bien pour une rupture suivant une génératrice que pour une rupture suivant une direction circonférentielle, l'épaisseur du manchon 68 est calculée pour résister à la pression régnant dans le circuit primaire, de telle sorte que le liquide primaire ne peut s'échapper par la brèche formée dans la tuyauterie qu'après être passé par les passages définis entre la paroi interne de cette tuyauterie et les extrémités 73 du manchon 68. Le débit de fuite qui en résulte est donc totalement contrôlé par le jeu calibré j défini entre chacune des extrémités 73 du manchon et la paroi interne de la tuyauterie 46.

Par ailleurs, le manchon 68 est démontable avec la tubulure interne 66 dont il est solidaire dans le mode de réalisation représenté. Le démontage de l'ensemble monobloc constitué par ces deux éléments s'effectue en manœuvrant la clavette 84 de l'extérieur de la cuve 10, de façon à extraire la clavette des trous en vis-à-vis formés dans le panier de cœur 16 et dans l'extrémité adjacente de la tubulure 66. L'ensemble formé par la tubulure et par le manchon est alors déplacé vers la droite en considérant la figure 2, de façon à dégager l'extrémité gauche de la tubulure 66 de l'alésage 80 formé dans le panier 16. Ce dernier peut donc être extrait de la cuve 10 après démontage du couvercle 12. L'ensemble monobloc constitué par la tubulure 66 et par le manchon 68 est ensuite déplacé vers la gauche en considérant la figure 2 à l'intérieur de la cuve 10 et facilement extrait par cette dernière, la longueur de la tubulure 66 étant à cet effet inférieure au diamètre interne de la cuve. Il est ainsi possible de procéder à l'inspection en service de l'intérieur des tubulures externes 46.

On remarquera que le manchon n'est soumis, en service normal, à aucune contrainte de pression, ce qui assure qu'il sera en état de remplir sa fonction de limitation de la fuite d'eau primaire au moment où se produirait une rupture de la tubulure de liaison.

On remarquera enfin que les manchons 68 assurent de plus la protection des tubulures 46 contre les cycles et les chocs thermiques intervenant pendant les périodes transitoires de fonctionnement du réacteur conduisant à des modifications du débit du fluide primaire ou à des modifications de la puissance du réacteur.

Bien entendu, l'invention n'est pas limitée au mode de réalisation décrit à titre d'exemple. Ainsi, le manchon de sécurité et la tubulure interne peuvent être constitués par deux pièces indépendantes, l'immobilisation du manchon à l'intérieur de la tubulure externe étant alors réalisée indépendamment de l'immobilisation axiale du conduit de liaison chaud par tout moyen approprié. De même, les moyens d'immobilisation de la tubulure interne que constitue la clavette 84 peuvent être modifiés ou placés à l'autre extrémité de la tubulure, c'est-à-dire du côté de la structure interne de la boîte à eau. De façon comparable, le manchon de sécurité et la tubulure interne peuvent être conçus pour se démonter d'une manière différente que celle qui vient d'être décrite sans sortir du cadre de l'invention telle que revendiquée. Ainsi, le diamètre de l'alésage 80 peut être supérieur au diamètre extérieur du manchon 68, ce qui permet de démonter ce dernier directement après enlèvement du couvercle 12 en faisant passer le manchon par cet alésage, sans procéder au démontage du panier. Dans ce cas, la longueur du manchon doit bien entendu être inférieure au diamètre interne du panier de cœur.

## Revendications

1. Chaudière nucléaire comprenant une cuve (10) fermée à sa partie supérieure par un couvercle démontable (12), un panier (16) portant le cœur (18) du réacteur et séparant la cuve en une zone interne chaude (20) et une zone externe froide (22), au moins un générateur de vapeur (48) disposé à l'extérieur de la cuve et comportant une enceinte étanche et une plaque à tubes (52) séparant l'enceinte en une partie primaire, ou boîte à eau (50), et une partie secondaire (54), la plaque à tubes portant des tubes en U (56) dont les extrémités débouchent dans une zone froide (60) et une zone chaude (58) de la boîte à eau délimitées par une structure interne (62), deux tubulures rectilignes et coaxiales (46, 66) définissant un conduit interne (42) et un conduit annulaire externe (44) qui relient respectivement les zones chaudes (20, 58) et les zones froides (22, 60) de la cuve et de la boîte à eau, caractérisée en ce qu'un manchon de sécurité démontable (68) dont la paroi est conçue pour résister à la pression régnant dans le conduit annulaire externe (44), est disposé coaxialement à l'intérieur de ce conduit et définit avec la tubulure externe (46) un jeu calibré (j) permettant de limiter à une valeur donnée le débit de fuite en cas de rupture de la tubulure externe (46), le manchon de sécurité (68) étant relié à la tubulure interne (66) par des ailettes (74), de façon à former avec cette tubulure un ensemble monobloc, et la tubulure interne (66) étant fixée de façon démontable au

panier de cœur (16) ou à la structure interne (62) de la boîte à eau, la longueur de l'ensemble monobloc formé par la tubulure interne (66) et par le manchon de sécurité (68) étant inférieure au diamètre interne de la cuve (10), de telle sorte que cet ensemble peut être extrait par la cuve après démontage du couvercle (12) et enlèvement du panier (16).

2. Chaudière nucléaire selon la revendication 1, caractérisée en ce que chacune des extrémités (73) du manchon de sécurité (68) s'étend au-delà de la paroi externe de la tubulure externe (46) et définit avec la paroi interne de cette tubulure ledit jeu calibré (j).

3. Chaudière nucléaire selon l'une quelconque des revendications précédentes, caractérisée en ce que des éléments annulaires élastiques (70) sont disposés entre le manchon de sécurité (68) et la paroi interne de la tubulure externe (46).

## Claims

1. Nuclear reactor comprising a pressure vessel (10) closed at the top by a removable cover (12), a basket (16) carrying the reactor core (18) and separating the pressure vessel into an internal hot zone (20) and an external cold zone (22) at least one steam generator (48) disposed externally of the pressure vessel and comprising a fluid-tight chamber and a tube plate (52) separating said chamber into a primary portion ; or water chest (50), and a secondary portion (54), the tube plate carrying U-tubes whose ends respectively open into a cold zone (60) and a hot zone (58) of the water chest, delimited by an internal member (62), two straight coaxial tubes (46, 66) defining an internal conduit (42) and an external annular conduit (44) which respectively connect the hot zones (20, 58) and the cold zones (22, 60) of the pressure vessel and the water chest, characterised in that a removable security sleeve (68) whose wall is formed to resist the pressure obtaining in the annular external conduit (44), is disposed coaxially within the said conduit and, together with the external tube defines a calibrated space (j) enabling fluid loss to be limited to a predetermined value in the event of rupture of the external tube (46), the security sleeve (68) being connected to the internal tube (66) by means of vanes (74), whereby to form a monobloc assembly with said tube, and the internal tube (66) being removably fastened to the core basket (16) on the internal member (62) of the water chest, the length of the monobloc assembly formed by the internal tube (66) and the security sleeve (68) being less than the internal diameter of the pressure vessel, whereby said assembly may be removed through the pressure vessel after separation of the cover (12) and removal of the basket (16).

2. Nuclear reactor according to claim 1, characterized in that each end (73) of the security sleeve (68) extends beyond the end of the external surface of the external tube (46) and defines said calibrated space (j) with the internal surface of said tube.

3. Nuclear reactor according to either one of the preceding claims, characterized in that annular elastic members (70) are located between the security sleeve (68) and the internal surface of the external tube (46).

## Ansprüche

1. Kernreaktor, bestehend aus einem Gehäuse (10), das an seinem oberen Teil von einem abnehmbaren Deckel (12) verschlossen ist, einem Korb (16), der den Kern (18) des Reaktors trägt und den Behälter in eine innere warme Zone (20) und eine äußere kalte Zone (22) teilt, wenigstens einem Dampferzeuger (48), der außerhalb des Gehäuses angeordnet ist und eine dichte Zelle und einen Rohrboden (52) enthält, der die Zelle in einen Primärraum oder Wasserbehälter (50) und einen Sekundärraum (54) teilt und U-förmige Rohre (56) hält, deren Enden in eine kalte Zone (60) und eine warme Zone (58) des Wasserbehälters münden, die durch einen Einbau (62) gegeneinander abgegrenzt sind, zwei geradlinigen koaxialen Rohren (46, 66), die eine innere Leitung (42) und eine ringförmige äußere Leitung (44) begrenzen, die die warmen Zonen (20, 58) und die kalten Zonen (22, 60) des Gehäuses und des Wasserbehälters jeweils miteinander verbinden, dadurch gekennzeichnet, daß eine demontierbare Sicherheitshülse (68), deren Wand ausreichend dimensioniert ist, um den in der äußeren ringförmigen Leitung herrschenden Druck zu widerstehen, koaxial im Innern dieser Leitung angeordnet ist und mit dem äußeren Rohr (46) einen kalibrierten Zwischenraum (j) bildet, der es erlaubt, im Falle eines Bruches des äußeren Rohres (46) die Ausströmungsmenge auf ein gegebenes Maß zu beschränken, daß die Sicherheitshülse (68) mit dem inneren Rohr (66) durch Flügel (74) so verbunden ist, daß mit diesem Rohr ein geschlossenes Ganzes gebildet wird, und daß das innere Rohr (66) demontierbar an dem Korb des Kernes (16) oder an dem Einbau (62) im Wasserbehälter befestigt ist, wobei die Länge des aus dem inneren Rohr (66) und die Sicherheitshülse (68) gebildeten geschlossenen Ganzen ausreichend kleiner ist als der Innendurchmesser des Gehäuses (10), damit diese Anordnung nach Abnahme des Deckels (12) und Herausheben des Korbes (16) durch das Gehäuse (10) hindurch entfernt werden kann.

2. Kernreaktor nach Anspruch 1 dadurch gekennzeichnet, daß jedes Ende (73) der Sicherheitshülse (68) sich über die Außenwand des Außenrohres (46) hinaus erstreckt und mit der Innenwand dieses Rohres den kalibrierten Zwischenraum (j) einschließt.

3. Kernreaktor nach einem der vorher genannten Ansprüche dadurch gekennzeichnet, daß ringförmige elestische Elemente (70) zwischen der Sicherheitshülse (68) und der Innenwand des Außenrohres (46) angeordnet sind.

FIG 1

FIG. 2

0 028 189